# FASCICULE DE BREVET EUROPEEN

(11) **EP 1 363 791 B1**
(45) Date de publication et mention de la délivrance du brevet: **23.04.2008**
(21) Numéro de dépôt: 02712910.5
(22) Date de dépôt: 14.02.2002
(51) Int. Cl.: B60C 15/02, B60B 21/12

(54) **ENSEMBLE D'UNE PNEUMATIQUE, D'UNE VIROLE ET D'UNE JANTE**
ANORDUNG VON REIFEN, REIFENFELGE UND RADROHLING
TYRE, HOOP AND RIM ASSEMBLY

(30) Priorité: 26.02.2001 FR 0102685
(43) Date de publication de la demande: 26.11.2003
(73) Titulaire: Société de Technologie Michelin, 63000 Clermont-Ferrand Cedex 09 (FR); Michelin Recherche et Technique S.A., 1763 Granges-Paccot (CH)
(72) Inventeur: DEAL, Michel, F-03110 Saint Rémy en Rollat (FR); BESTGEN, Luc, F-63140 Chatel-Guyon (FR)
(74) Mandataire: Le Cam, Stéphane Georges Elie
(86) Numéro de dépôt international: PCT/EP2002/001577
(87) Numéro de publication internationale: WO 2002/068223

(56) Documents cités:
- DE-A- 3 337 326
- FR-A- 2 773 745
- GB-A- 794 779
- PATENT ABSTRACTS OF JAPAN vol. 008, no. 166 (M-314), 2 août 1984 (1984-08-02) & JP 59 063202 A (BRIDGESTONE KK), 10 avril 1984 (1984-04-10)

## Description

L'invention concerne un ensemble roulant composé d'un pneumatique, et d'une roue, ladite roue comprenant au moins une virole assurant la liaison entre une jante quasi cylindrique et ledit pneumatique.

La plupart des ensembles pneumatique-roue connus sont construits tels que la roue soit démontable du véhicule équipé, le pneumatique étant amovible par rapport à la roue par une opération faite en atelier avec des machines adaptées. Une roue usuelle comprend entre autres choses une jante qui, suivant le véhicule et l'ensemble considéré, peut être en une ou plusieurs pièces. Le montage d'un pneumatique, qui consiste à positionner correctement les bourrelets de pneumatique sur les sièges et contre les rebords d'une jante, n'est pas une opération aisée pour un spécialiste et à plus forte raison pour un utilisateur normal, et ne conduit pas toujours aux résultats escomptés : position correcte, étanchéité parfaite, serrage sur siège suffisant, ...etc... Il en est de même du démontage du pneumatique qui requiert des efforts et un soin que ne peut apporter un conducteur moyen. Afin de simplifier les dites opérations de montage et de démontage d'un pneumatique, c'est-à-dire ne pas nécessiter de machines spécialisées ni un savoir-faire important, il a été proposé une méthode consistant à enfiler sur un support cylindrique ou quasi cylindrique, support que nous appèlerons, par extension de langage, jante, le pneumatique par simple déplacement transversal relatif entre ladite jante et ledit pneumatique. Il est évident que la mise en pratique de ladite méthode nécessite un troisième élément.

Pour les engins de Génie Civil, le brevet FR-A-2 087 770 décrit des bourrelets munis sur leurs surfaces portantes d'une ou plusieurs pièces métalliques annulaires fixées à demeure sur les dits bourrelets, pièces faisant office de sièges de jante et destinés à reposer sur un support cylindrique solidaire du véhicule équipé et faisant office de fond de jante ou jante. Le troisième élément ci-dessus est donc l'ensemble des dites pièces métalliques qui permettent de faire coulisser l'ensemble pneumatique-sièges sur le support et ainsi d'assurer des montage et démontage plus aisés.

Pour des pneumatiques de plus petites dimensions, et de structures usuelles, c'est-à-dire avec au moins une armature de carcasse, une bande de roulement réunie à deux bourrelets par deux flancs, le brevet FR-A-2 773 745 décrit un ensemble comprenant ledit pneumatique, un support quasi cylindrique ou jante et un troisième élément consistant en une virole ou adaptateur spécifiquement développé pour être associé audit pneumatique et constituer un sous-ensemble ayant les propriétés recherchées de montabilité et démontabilité. La dite virole, de largeur axiale sensiblement égale à la largeur du support ou jante, est destinée à être montée sous les bourrelets du pneumatique de structure usuel et comporte deux sièges pour recevoir les dits bourrelets. Elle est apte à former avec le pneumatique un tore fermé définissant une enceinte étanche, et constitue la paroi radialement intérieure du tore. Elle comprend des moyens de blocage pour immobiliser axialement le pneumatique sur la jante ; les dits moyens sont aménagés sur sa face radialement intérieure, sont destinés à coopérer avec un élément complémentaire aménagée sur la jante pour s'opposer à tout mouvement axial entre jante et pneumatique, et sont aménagés dans une partie de la virole qui présente un certain degré de flexibilité entre une position naturelle libre et une position contrainte radialement vers l'extérieur dans laquelle les moyens de blocage sont libres de tout engagement avec l'élément complémentaire. Lorsque l'enceinte étanche est à la même pression que la pression atmosphérique, les moyens de blocage sont engagés avec l'élément complémentaire afin de bloquer axialement le pneumatique, et ne sont libérés que par imposition de moyens extérieurs. Les opérations de montage et de démontage font appel, selon l'invention décrite, à une mise en dépression de l'enceinte étanche formée par le pneumatique et la virole, dépression qui provoque une augmentation de diamètre de la plus grande partie de la virole et donc d'enfiler facilement le pneumatique sur la jante, l'immobilisation du pneumatique étant réalisée par mise en place des moyens de blocage suite à suppression de la dépression. Lors du démontage, la mise en dépression de l'enceinte étanche permet le déplacement des moyens de blocage vers des diamètres supérieurs et ainsi le glissement du pneumatique hors de la jante. De manière générale, les moyens de blocage sont avantageusement une protubérance ou une rainure associées avec une rainure ou protubérance adaptées sur la jante. Par le choix des matériaux, du dessin et du dimensionnement de la virole, il est très aisément possible de conférer à la plus grande partie axiale de ladite virole la flexibilité nécessaire aux déformations souhaitées.

Une virole en matériau élastomérique renforcé, présentant de chaque côté du plan équatorial un bord destiné à recevoir un bourrelet de pneumatique, bord renforcé principalement par un ressort métallique, et entre les deux bords, une partie centrale comprenant les moyens de blocage et renforcée par une nappe d'éléments de renforcement radiaux, présente, en combinaison avec les variations dimensionnelles des bourrelets de pneumatique, les inconvénients qui suivent : l'apparition de frottements trop importants des bords de la virole sur la jante lors du montage et l'apparition de glissements non négligeables entre la face radialement intérieure de la virole et la face radialement supérieure de la jante lors de l'utilisation du système roulant conduisent à des usures inacceptables de la virole et de la jante et à une déformation excessive des éléments radiaux de renforcement, déformation nuisible à une endurance correcte.

Pour remédier à de tels inconvénients, l'ensemble roulant, conforme à l'invention, et comprenant un pneumatique avec au moins deux bourrelets, une jante quasi cylindrique, une virole en matériau polymérique avec deux bords axiaux renforcés chacun par au moins un anneau et entre les dits bords une partie centrale renforcée par au moins une armature d'éléments de renforcement telle que ladite partie soit suffisamment flexible pour permettre le déplacement radial d'un élément de blocage agissant de concert avec un élément complémentaire du même nom de la jante de largeur axiale W, est caractérisé en ce que le renforcement de chaque bord de la virole est un crochet de virole avec un siège et un rebord, les dits crochet, siège et rebords étant semblables à des crochet, siège et rebord de jante avec des dimensions radiales et axiales conformes aux normalisations en vigueur, la largeur de jante étant inférieure à la distance axiale séparant les extrémités axialement intérieures des sièges de la virole. Le renforcement des bords de la virole par des crochets rigides de type standard pour des jantes usuelles autorisent le montage des pneus tenant compte des variations dimensionnelles des bourrelets que l'on observe selon les modèles ou les marques. Le montage du sous-ensemble pneumatique / virole sur la jante est ainsi garanti comme étant un montage simple qui ne nécessite pas d'outils particuliers et sans risque de voir le sous-ensemble pneumatique / virole se présenter avec un diamètre inférieur à celui de la jante dans les zones des crochets de virole.

Les phénomènes d'usure entre la virole et la jante peuvent être très fortement minimisés voire complètement supprimés si la partie centrale de la virole possède un certain pouvoir de frettage qui lui est conféré par le renforcement au moyen d'une armature d'au moins deux nappes d'éléments de renforcement, parallèles entre eux dans chaque nappe et croisés d'une nappe à la suivante en faisant avec la direction circonférentielle de la virole des angles pouvant être compris entre 30° et 65°.

Le frettage circonférentiel de la partie centrale est avantageusement plus important aux bords de la dite partie : aussi chaque portion de virole en regard des bords de la jante peut être renforcée par une bande additionnelle d'éléments de renforcement circonférentiels, les dits éléments étant préférentiellement en polyamide aliphatique se contractant sous l'effet de la chaleur.

Les angles choisis, différents de 90°, pour les éléments de renforcement de la virole, permettent aux dits éléments d'être plus résistants à la fatigue, car non soumis à des flexions sur chant répétées.

L'invention sera mieux comprise à l'aide de la description qui va suivre d'un exemple donné à titre non limitatif, en se référant au dessin en annexe sur lequel la figure unique représente schématiquement un ensemble conforme à l'invention.

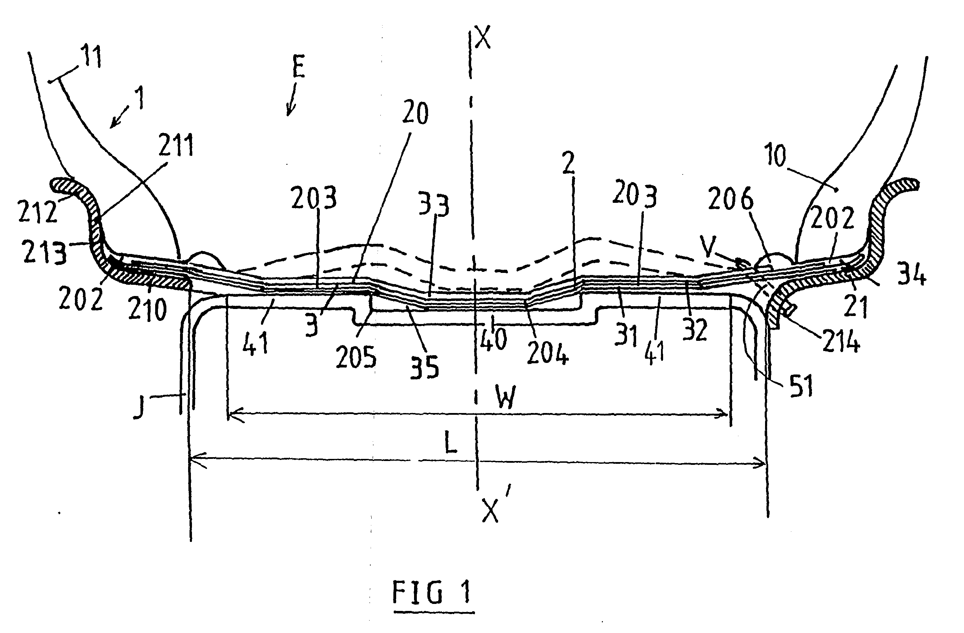

L'ensemble E de la figure 1 est composé d'un pneumatique 1, d'une jante J et d'une virole élastomérique 2 ; X X' représente la trace du plan médian de l'ensemble E. Le pneumatique 1 comprend, comme connu en soi, une armature de carcasse surmontée radialement d'une armature de sommet et d'une bande de roulement (armatures et bande de roulement non montrées), réunie à deux bourrelets 10 par l'intermédiaire de deux flancs 11.
Les bourrelets 10 du pneumatique 1 sont destinés à être montés sur les crochets métalliques 21 de la virole 2, crochets tout à fait comparables aux crochets de jantes usuelles et connues, c'est-à-dire crochets formés d'un siège 210, plat et/ou tronconique, et d'un rebord 211 pouvant être caractérisé par l'addition d'une partie 213 perpendiculaire à l'axe de rotation de l'ensemble E et d'une partie arrondie 212.

Les dits crochets 21 sont d'une part radialement accolés à et d'autre part axialement réunis par la partie polymérique 20 de ladite virole 2. La partie 20 est constituée de deux portions 202 destinées à entrer en contact avec les sièges 210 des crochets 21 de virole 2, prolongées axialement par deux portions cylindriques 203 destinées à entrer en contact avec les parties cylindriques 41 correspondantes de la jante J de l'ensemble E, les dites portions 203 étant réunies axialement par l'élément de blocage 204 de la virole 2. Ledit élément 204 se présente sous la forme d'une protubérance avec sur chaque côté une portée de blocage 205 circonférentiellement continue et orientée, dans le cas décrit, perpendiculairement à l'axe de rotation de l'ensemble. La face radialement extérieure de la virole 2 a axialement une forme sensiblement parallèle à celle de la face radialement intérieure ; cependant, la portion 202 et la portion cylindrique 203 sont reliées axialement par la face supérieure d'une saillie ou hump 206, de forme et de dimensions semblables aux forme et dimensions des saillies ou humps normalisés pour les jantes usuelles.

La partie polymérique de la virole 2 est composée d'une armature de renforcement 3 formée de deux nappes 31 et 32 de câbles métalliques en acier, parallèles entre eux dans chaque nappe, croisés d'une nappe à la suivante en formant avec la direction circonférentielle un angle de 45°, et enrobés dans un mélange caoutchouteux vulcanisé. Les dites nappes 31 et 32 ont une largeur telle qu'elles recouvrent les deux sièges 210 de virole pour se terminer sur les arrondis reliant sièges 210 et rebords 211. L'armature 3 est recouverte, dans sa partie entre sièges 210 et radialement à l'extérieur, d'une couche 33 de mélange caoutchouteux imperméable aux gaz, alors qu'elle est recouverte radialement à l'extérieur, dans les portions 202, d'une couche 34 de mélange caoutchouteux de protection. Il faut entendre par couche de mélange caoutchouteux imperméable aux gaz une couche de constitution connue semblable à la couche de mélange caoutchouteux utilisée usuellement à l'intérieur des pneumatiques dits sans chambre à air ou de constitution équivalente. Il faut de même entendre par couche de mélange caoutchouteux de protection une couche de mélange caoutchouteux de constitution connue semblable à la couche usuellement appliquée pour la protection des bourrelets de pneumatique ou de constitution équivalente. Sur la face radialement inférieure et dans la partie entre sièges 210 de virole 2, est disposée une couche de protection 35 identique à la couche de protection ci-dessus et principalement destinée à venir en contact avec la jante J.

Quant à la jante J de montage, elle se présente sous la forme d'un cylindre avec une surface comportant deux portions cylindriques 41 et, entre les dites portions 41, une rainure 40 circonférentiellement continue, ayant le rôle d'élément complémentaire de blocage, et de dimensions adaptées au dimensionnement de l'élément 204 de la virole 2. Avec, sur chaque côté, une portée de blocage 205, le dit élément 204 coopère avec la rainure 40 pour éviter tout déplacement axial par rapport à la jante J de la virole 2 et du pneumatique 1, gonflé à sa pression recommandée et en roulage. La jante J a une largeur axiale W, mesurée entre les extrémités extérieures des portions cylindriques, pouvant être comprise entre la distance axiale L séparant les extrémités intérieures des sièges 210 et 60% de cette distance L, le contact radial entre métal des sièges et métal de la jante devant être évité.

Comme explicité dans la demande de brevet cité en préambule, demande à laquelle il est fait référence, le procédé de montage du pneumatique 1 monté sur la virole 2, et formant une enceinte étanche, comporte les étapes suivantes :
* mettre en dépression l'enceinte jusqu'à provoquer un déplacement d'une ampleur suffisante de l'élément de blocage 204 vers les plus grands rayons (schématisé par des lignes en pointillés sur la figure 1),
* enfiler ou achever d'enfiler axialement l'ensemble pneumatique-virole sur la jante de montage J jusqu'à ce qu'il prenne sa position axiale finale par rapport à la jante J,
* annule la dépression de façon à ce que l'élément de blocage de déplace radialement vers les rayons plus petits pour se positionner dans la rainure 40. Le procédé de démontage de l'ensemble pneumatique-virole comporte les mêmes étapes, qui sont mise en dépression, déplacement axial. La mise en dépression de l'enceinte est suffisante pour provoquer le déplacement radial de la partie élastomérique de la virole 2, sans cependant affecter des autres constituants du pneumatique 1.

Il est évident que la mise en dépression de l'enceinte et que sa mise en pression ultérieure nécessite la présence d'une valve de gonflage V représentée très schématiquement sur la figure 1, le corps de valve 51 étant positionné par un orifice dans l'appendice radial 214 prolongeant axialement et radialement l'un des sièges 210 de virole 2, ledit corps ayant l'orifice de sortie sensiblement situé à proximité de la face axialement intérieure de la saillie 206 de la face supérieure de la virole 2.

## Revendications

1. - Ensemble roulant E, comprenant un pneumatique (1) avec au moins deux bourrelets (11), une jante quasi cylindrique J, une virole (2) en matériau polymérique avec deux bords axiaux renforcés chacun par au moins un anneau et entre les dits bords une partie centrale renforcée par au moins une armature d'éléments de renforcement telle que ladite partie soit suffisamment flexible pour permettre le déplacement radial d'un élément de blocage agissant de concert avec l'élément complémentaire du même nom de la jante J de largeur axiale W, **caractérisé en ce que** le renforcement de chaque bord de la virole (2) est un crochet (21) de virole avec un siège (210) et un rebord (211), les dits crochets (21), sièges (210) et rebords (211) étant semblables à des crochets, sièges et rebords de jante avec des dimensions radiales et axiales conformes aux normalisations en vigueur, la largeur de jante W étant inférieure à la distance axiale L séparant les extrémités axialement intérieures des sièges (210) de la virole (2).

2. - Ensemble selon la revendication 1, **caractérisé en ce que** la partie centrale de la virole (2) est renforcée au moyen d'une armature (3) d'au moins deux nappes (31, 32) d'éléments de renforcement, parallèles entre eux dans chaque nappe, croisés d'une nappe à la suivante en faisant avec la direction circonférentielle de la virole (2) des angles pouvant être compris entre 30° et 65°, et enrobés dans un mélange caoutchouteux vulcanisé.

3. - Ensemble selon la revendication 2, **caractérisé en ce que** chaque portion (203) de virole (2) en regard des bords de la jante est renforcée en outre par une bande additionnelle d'éléments de renforcement circonférentiels, les dits éléments étant en polyamide aliphatique se contractant sous l'effet de la chaleur.

## Claims

1. - Rolling assembly E comprising a tyre (1) with at least two beads (11), a substantially cylindrical rim J, a collar (2) made of a polymeric material with two axial edges each reinforced by at least one ring, and between the said edges, a central portion reinforced by at least one armature of reinforcement elements such that the said portion is sufficiently flexible to allow the radial displacement of a blocking element which acts in concert with the complementary element of the same name of the rim J of axial width W,
**characterised in that**
the reinforcement of each edge of the collar (2) is a collar hook (21) with a seat (210) and a flange (211), the said hooks (21), seats (210) and flanges (211) being similar to the rim hooks, seats and flanges with radial and axial dimensions in accordance with the standards in force, the width W of the rim being smaller than the axial distance L separating the axially inside ends of the seats (210) of the collar (2).

2. - Assembly according to Claim 1,
**characterised in that**
the central portion of the collar (2) is reinforced by an armature (3) of at least two plies (31, 32) of reinforcement elements parallel to one another within each ply, crossed over from one ply to the next, forming with the circumferential direction of the collar (2) angles which may be between 30° and 65°, and being embedded in a vulcanised rubber mixture.

3. - Assembly according to Claim 2,
**characterised in that**
each portion (203) of the collar (2) opposite the edges of the rim is additionally reinforced by a supplementary strip of circumferential reinforcement elements, the said elements being of an aliphatic polyamide which contracts under the action of heat.

## Patentansprüche

1. Fahreinheit E, umfassend einen Luftreifen (1) mit mindestens zwei Wülsten (11), eine nahezu zylindrische Felge J, eine Umfassung (2) aus Polymermaterial mit zwei verstärkten Axialumrandungen, die jeweils durch mindestens einen Ring verstärkt sind, und zwischen den Rändern einen mittleren Teil, der durch mindestens eine Armierung aus Verstärkungselementen verstärkt ist, so dass der Teil flexibel genug ist, um die Radialbewegung eines Arretierungselements zu ermöglichen, das mit einem gleichnamigen ergänzenden Element der Felge J mit der Axialbreite W zusammenwirkt, **dadurch gekennzeichnet, dass** die Verstärkung jedes Randes der Umfassung (2) ein Umfassungshaken (21) mit einer Auflage (210) und einem Felgenring (211) ist, wobei die Haken (21), Auflagen (210) und Felgenringe (211) den Haken, Auflagen und Felgenringen der Felge mit radialen und axialen Abmessungen, die den geltenden Normierungen entsprechen, ähnlich sind, wobei die Felgenbreite W kleiner ist als der Axialabstand L, der die axial inneren Enden der Auflagen (210) der Umfassung (2) trennt.

2. Einheit nach Anspruch 1, **dadurch gekennzeichnet, dass** der mittlere Teil der Umfassung (2) durch eine Armierung (3) aus mindestens zwei Lagen (31, 32) aus Verstärkungselementen verstärkt ist, die in jeder Lage zueinander parallel sind, von einer Lage zur anderen gekreuzt sind, wobei sie mit der Umfangsrichtung der Umfassung (2) Winkel bilden, die zwischen 30° und 65° liegen können, und mit einem vulkanisierten Gummigemisch umhüllt sind.

3. Einheit nach Anspruch 2, **dadurch gekennzeichnet, dass** jeder Abschnitt (203) der Umfassung (2) gegenüber den Rändern der Felge außerdem durch ein zusätzliches Band aus Umfangsverstärkungselementen verstärkt ist, wobei die aus aliphatischem Polyamid bestehenden Elemente sich unter Hitzeeinwirkung zusammenziehen.
